# EUROPEAN PATENT SPECIFICATION

(11) **EP 1 402 484 B1**
(45) Date of publication and mention of the grant of the patent: **04.01.2006**
(21) Application number: 02733124.8
(22) Date of filing: 03.06.2002
(51) Int. Cl.: G07F 19/00

(54) **PAYMENT AUTHORISATION THROUGH BEACONS**
ZAHLUNGSBERECHTIGUNG DURCH BAKEN (LICHTSIGNAL)
AUTORISATIONS DE PAIEMENT PAR BALISE

(30) Priority: 05.06.2001 GB 0113630
(43) Date of publication of application: 31.03.2004
(73) Proprietor: Koninklijke Philips Electronics N.V., 5621 BA Eindhoven (NL)
(72) Inventor: LANGENSTEINER, Hubert, NL-5656 AA Eindhoven (NL); RANKIN, Paul, J., NL-5656 AA Eindhoven (NL)
(74) Representative: White, Andrew Gordon
(86) International application number: PCT/IB2002/002021
(87) International publication number: WO 2002/099758

(56) References cited:
- WO-A-00/38443
- WO-A-00/75885
- WO-A-98/34203
- US-A- 5 887 266
- HAARTSEN J ET AL: "BLUETOOTH: VISION, GOALS, AND ARCHITECTURE" MOBILE COMPUTING AND COMMUNICATIONS REVIEW, ACM, NEW YORK, NY, US, vol. 2, no. 4, 1 October 1998 (1998-10-01), pages 38-45, XP000784002 ISSN: 1091-1669

## Description

The present invention relates to the provision of goods or services offered to users of electronic equipment, especially but not exclusively to users of mobile communications devices such as portable telephones and suitably equipped PDA's (personal digital assistants) and more particularly to an arrangement for paying for such goods or services. The invention further relates to means for authorising delivery on payment for such goods or services.

Recent years have seen a great increase in subscribers world-wide to mobile telephone networks and, through advances in technology and the addition of functionalities, cellular telephones have become personal, trusted devices. A result of this is that a mobile information society is developing, with personalised and localised services becoming increasingly more important. Such "Context-Aware" (CA) mobile telephones are used with low power, short range base stations in places like shopping malls to provide location-specific information. This information might include local maps, information on nearby shops and restaurants and so on. Whilst such information will often be transmitted free of charge, there may be data services (for example an update to sports scores, the downloading of a new ringing tone for a mobile telephone) for which the user is charged. Whilst payment for such goods and services may be made by conventional methods, such as the sending of cheques or credit card authorisations, by tele-banking or direct debit arrangements, it has been recognised that a wireless-linked automated payment system could be beneficial to a user.

Wireless transactions at a distance (eg from a few metres) require special measures to capture the intent and consent of the user. These may entail the user memorising pin codes and unnecessary interaction effort in pushing buttons or typing numbers on their mobile device: such procedure is onerous for a small purchase. The transaction details themselves then need to be carried over a secure wireless network protocol.

For example, international patent application WO00/75885 describes a wireless phone/pager system which is modified to allow an owner access to proximity services using their wireless phone/pager. The system virtually eliminates the need to carry multiple credit cards and access devices such as toll tags traditionally used to obtain services such as toll tag access, ATM cash dispensing and so on. In particular, a phone/pager provided with a built-in fingerprint detector unit is described which provides unique owner codes which can be used to either replace or supplement the PIN codes usually required with proximity service providers. Hence, although the system may automate to some extent the interaction required for a wireless transaction, it still suffers from the above mentioned disadvantages, in particular for instances where a user not only still has to memorise and input a PIN number, but must also provide a fingerprint via the inbuilt unit on the phone/pager.

It is therefore an object of the present invention to provide a means for authorising payments making use of the freedom given by wireless link and without the user having to undertake a lengthy or complex authorisation procedure.

In accordance with a first aspect of the present invention there is provided an automated payment system comprising a data store holding financial data of a user, a first beacon device capable of wireless message transmissions and at least one portable device capable of receiving such message transmissions, wherein said data store further holds an identifier associated with a portable device of said user, wherein said first beacon acts as a sales point for goods or services and is arranged to broadcast a series of inquiry messages over a short range and according to a first communications protocol, wherein said at least one portable device is arranged to detect such inquiry messages when within range and reply with an identifier for the portable device, wherein said first beacon device is arranged to transmit a received identifier to said data store, and wherein upon matching by said data store of a received and stored identifier, clearance is given for the release of said goods or services to the user, characterised in that the system further comprises a second device operable to release said goods or services, coupled to communicate with a users portable device to establish the identity of the same, and arranged to obtain said clearance for that portable device from said data store prior to release of said goods or services.

With the short range broadcast of inquiry messages, to obtain clearance for a purchase, the user need simply pass his/her portable device within the short range of the first beacon to trigger the clearance procedure.

In such an arrangement, the second device may comprise one or more second beacon devices linked to the first beacon device and data store and operable to deliver data services to the portable device of a user following receipt of the identifier for that portable device from said first beacon device and receipt of the appropriate clearance from the data store.

The system may comprise a plurality of the first beacon devices distributed over a geographic area (e.g. a shopping mall) and linked - suitably via a secure data channel - to a common data store, with each beacon arranged to receive identifiers from a portable device and provide clearance for the release of respective goods or services.

The invention further provides a mobile communication device for use in the system recited above, the device comprising a receiver capable of receiving a short-range wireless inquiry message, processing means operable to process data contained within said message and compose a response message including an identifier for the device, and transmission means configured to wirelessly transmit said composed response message to the source of the inquiry message.
The invention yet further provides a communications infrastructure for use in the automated payment system recited above, the infrastructure comprising said data store and said first beacon device and an interconnection therebetween, said first beacon device being capable of wireless message transmission over a short distance and to at least one portable device, wherein said first beacon is operable to broadcast a series of inquiry messages according to a first communications protocol, to detect any response messages containing a portable device identifier for said portable device, and to transmit a received identifier to said data store, and wherein said data store is configured to perform a comparison between a received Identifier for said portable device and a stored identifier for the user and, upon detection of a match, to give clearance for the release of goods or services to the same,characterised in that the infrastructure further comprises a second device operable to release said goods or services, coupled to communicate with a users portable device to establish the identity of the same, and wherein the second device is arranged to obtain said clearance for that portable device from said data store prior to release of said goods or services.

Also in accordance with the present invention there is provided a method for enabling the user of a portable communications device to purchase goods or services through a service interaction with a beacon device in an environment containing at least a data store holding financial data of a user and a first beacon device capable of wireless message transmission, and a second device operable to release said goods or services, coupled to communicate with a users portable device to establish the identity of the same, and arranged to obtain said clearance for that portable device from said data store prior to release of said goods or services, and wherein the first beacon broadcasts a series of inquiry messages over a short distance and according to a first communications protocol, the users portable device detects such inquiry messages and replies with an identifier for the portable device, the first beacon device transmits a received identifier to said data store and, upon matching by said data store of a received and stored identifier, clearance is obtained by the second device prior to release of said goods or services to a user.

The data store may further hold a financial balance for a user, from which balance a predetermined cost for respective goods or services is deducted prior to clearance being given for their release, optionally with clearance being withheld if, at any time, a current balance is insufficient to meet the cost of a requested item of goods or services.

To avoid erroneous clearances, or possible misappropriation, the method may comprise the further step of determining that there are no similarly configured portable devices communicating with the first beacon device during the obtaining of clearance and prior to the release of said goods or services: the step of determining may require the user to keep their portable device within communications range of the first beacon for a predetermined period.

For enhanced user-friendliness, the method may further comprise the step of enabling user-selection from a menu of available goods or services prior to obtaining clearance for the release of the user-selected item of goods or services.

Further features and advantages of the present invention are recited in the attached claims, the disclosure of which is incorporated herein by reference, and to which the reader is now directed.

Preferred embodiments of the invention will now be described, by way of example only, and with reference to the accompanying drawings, in which:
Figure 1 is a block schematic diagram of a beacon, data store, and portable device embodying the invention;
Figure 2 shows in greater detail some features of the embodiment of Figure 1; and
Figure 3 represents a variant on the system of Figure 1 utilising multiple beacons.

In the following description we consider particularly a CA application which utilises Bluetooth protocols for communication of messages from beacon to portable device (whether telephone, PDA or other). As will be recognised, the general invention is not restricted to Bluetooth devices, and is applicable to other communications arrangements.

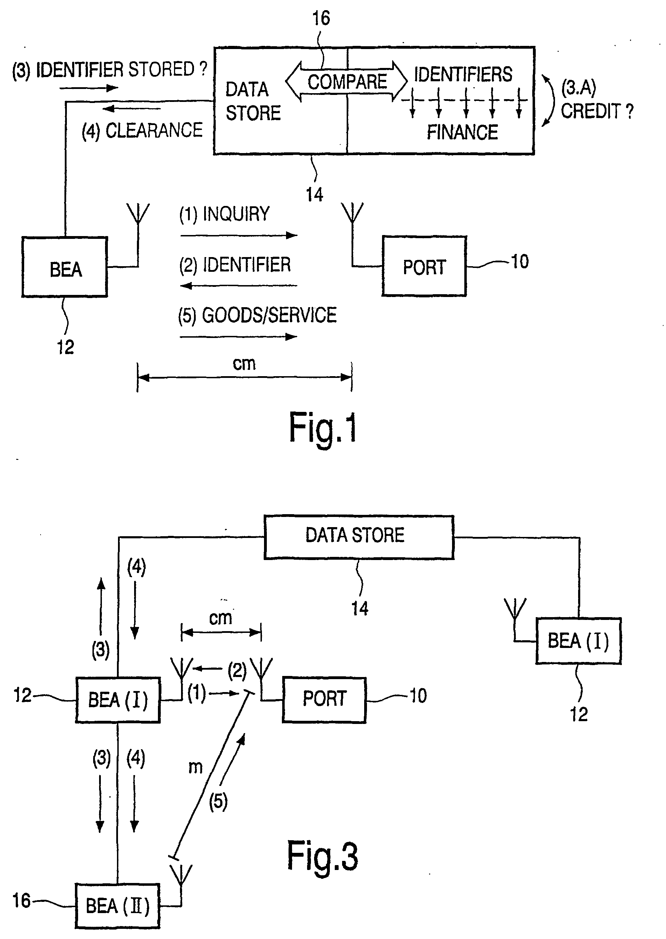

Figure 1 shows in generalised form the component features of an automated payment system, comprising a data store 14 holding financial data of a user, a first 12 beacon device capable of wireless message transmission and at least one portable device 10 capable of receiving such message transmissions. The figure illustrates, by the numbers in parentheses, the sequence of message transmission

The first beacon is arranged to broadcast a series of inquiry messages (1) according to a first communications protocol, such as Bluetooth. The portable device 10 detects such inquiry messages and replies (2) with an identifier for the portable device. The first beacon 12 then transmits (3) the received identifier to the data store 14, which in turn checks 16 for a match between received and stored identifiers. On detection of a match, and following an optional credit check (3.A), a clearance signal (4) is sent to the first beacon 12 which then releases (5) the paid-for goods or services. Such an arrangement may be used in places like shopping malls to vend location-specific information such as local maps, access to local clubs and so on, with a beacon downloading the data to the mobile device, or otherwise making available (for example via a mechanical dispenser) a product so purchased.

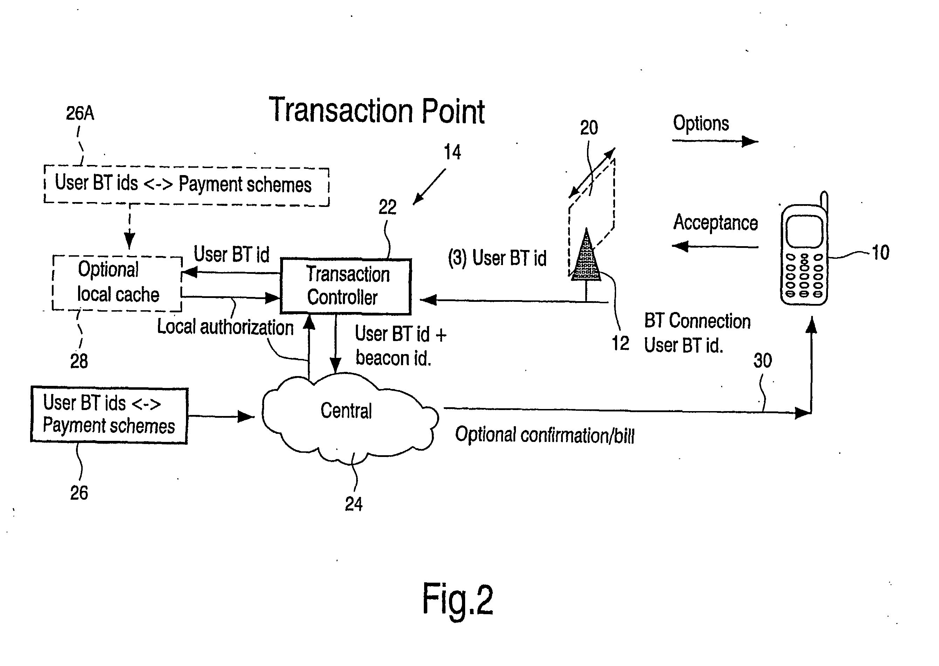

Figure 2 presents an embodiment of the generic system of Figure 1 in more detail and with additional features. As shown, mobile telephone 10 is the mechanism by which the user authorises payment, with purchase options being initially offered to the user via a screen or audio menu 20 associated with the beacon 12 in the form of a Bluetooth access point.

For many simple transactions, the user device 10 can get into very close proximity with the fixed, transaction access-point 12. The range of a Bluetooth Access Point can be reduced to 1-2cm by adjusting the transmission power of its Bluetooth radio. The access point can then continuously perform just the Bluetooth Inquiry scanning function, discovering the BT_ADDR's of any mobile device which has deliberately been held for a given number of seconds (e.g. 3) within the range of the access point 'reader' by its user. The mobile's BT_ADDR device id is then passed over a fast back-end (fixed line, GPRS/GSM call etc) to a transaction controller 22 forming a part of the transaction point or data store 12. From the transaction controller 22, the BT_ADDR device id is passed to a central system 24 for its validation against a database 26 of those mobile device Identifiers which have user-registered payment methods enabled (e.g. phone bills, credit cards.). In case of a slow back-end, it may be necessary for the transaction controller 22 to maintain a regularly-updated, local cache 28 holding a copy 26.A of this payment authorisation database. From the central system 24, a confirmation of a payment (or a bill to be paid) may be sent over e.g. WAN 30 to the mobile device 10.

The system therefore provides a natural, very easy-to-use and explicit solution for purchases with a user's mobile Bluetooth-enabled device. Any Bluetooth devices can be used in this fashion, as they all have unique Bluetooth Identifiers: operation is as simple and positive an action as using a credit card swipe. As will be recognised, the same mechanism may be implemented using other RF standards that entail unique RF device Identifiers, for example, 802.11, PurlNet/Lite with a reduced-range.

As mentioned, more than one beacon may be part of the system. A shopping mall might place one at each entrance to the building, or within each retail unit to permit the purchase of goods or services therein. Figure 3 illustrates some options for extending the general scheme, with a second instance of the first beacon type 12 connected to the same data store, as well as a second beacon type 16 coupled with a first. With this second beacon type, the duration of interactions between the mobile 10 and the payment authorising beacon 12 may be kept short, with the service interaction for the delivery of services or enabling of access to purchased goods being handled at beacon 16. As indicated by the lines respectively marked "cm" and "m" in the Figure, the second beacon may be a much higher powered device having a far greater broadcast range than the first beacon 12, such that a user is not then required to hold the mobile in such close proximity to a beacon in order to conclude the transaction.

The idea of using the short(cm)-range Bluetooth-readers for small payments has very wide application, such as payment for entry fees, purchasing soft drinks from vending machines, payment of phone charges, purchase of train tickets and so forth, all of which may be charged back to a users telephone bill or a pre-registered credit card. For larger payments with a corresponding higher risk, then more sophisticated security measures than just sole reliance on a Bluetooth device address may be applied, for example the exchange of digital certificates, private/public key encryption methods and so forth.

The system is very easy to use: a user need only hold the mobile 10 under the Bluetooth reader (or other form of first beacon) for a few seconds (no number entry or secure transaction protocol being required) after pressing the Brand X selection on a vending machine. The vending machine sends back to the central authorisation system (via secure GPRS or any other transaction back-end system) the users Bluetooth Identifier for debiting. After registering a transaction, the access point should provide feedback (audibly or visually) to the user to indicate the completion of the process. Feedback may be direct from the access point, or to the mobile (via wide-area network - line 30; Fig. 2 - or Bluetooth). A time delay may be deliberately inserted, or a pause added until the regular Inquiry polling has discovered an absence of any Bluetooth device in proximity, before the access point is activated again to accept another mobile device for payment.

The user must have pre-registered their Bluetooth device Identifier for use as a payment device and authorised a payment scheme (credit card number, associated telephone number for billing back against their telephone bill etc) to which it is correlated in a central database. Protections can be added, for example to limit the maximum expenditure using the Bluetooth device Identifier as authorisation within a given period, to limit the maximum number of repeated payments of same type or maximum number at the same transaction device, to stop transactions with stolen mobile devices (perhaps noting their currently-detected access-point location) and so on.

The main advantage for the user is the natural simplicity and transparency of this physical purchase action. Savings can also made on the system side in reducing unnecessary Bluetooth secure protocol handling, with the corresponding reduction of wasted radio spectrum usage.

From reading the present disclosure, other modifications will be apparent to persons skilled in the art. Such modifications may involve other features which are already known in the design, manufacture and use of fixed and portable communications systems, and systems and components for incorporation therein and which may be used instead of or in addition to features already described herein.

## Claims

1. An automated payment system comprising a data store (14) holding financial data of a user, a first beacon device (12) capable of wireless message transmissions and at least one portable device (10) capable of receiving such message transmissions, wherein said data store (14) further holds an identifier associated with a portable device (10) of said user, wherein said first beacon (12) acts as a sales point for goods or services and is arranged to broadcast a series of inquiry messages (1) over a short range and according to a first communications protocol, wherein said at least one portable device (10) is arranged to detect such inquiry messages when within range and reply (2) with an identifier for the portable device, wherein said first beacon device (12) is arranged to transmit (3) a received identifier to said data store (14), and wherein upon matching by said data store of a received and stored identifier, clearance (4) is given for the release of said goods or services to the user,
**characterised in that** the system further comprises a second device (16) operable to release said goods or services, coupled to communicate with a users portable device (10) to establish the identity of the same, and arranged to obtain said clearance (4) for that portable device from said data store (14) prior to release of said goods or services.

2. A system as claimed in Claim 1, wherein said second device (16) comprises one or more second beacon devices linked to said first beacon device (12) and said data store (14) and operable to deliver data services to the portable device (10) of a user following receipt of the identifier for that portable device from said first beacon device (1-2) and receipt of said clearance (4) from said data store (14).

3. A system as claimed in Claim 1, comprising a plurality of first beacon devices (12) distributed over a geographic area and linked to a common data store (14), and each arranged to receive identifiers (3) from a portable device (10) and provide clearance for the release of respective goods or services.

4. A system as claimed in Claim 1, further comprising a secure data channel linking said first beacon device (12) and data store (14) for the transmission (3) of received identifiers.

5. A system as claimed in Claim 1, wherein said first communications protocol comprises Bluetooth messaging and wherein the first beacon device (12) is configured to broadcast a series of inquiry messages (1) on a predetermined clocked succession of frequencies, with clock information for said first beacon device being included in data carried by said additional data field.

6. A communications infrastructure for use in the automated payment system of Claim 1, the infrastructure comprising said data store (14) and said first beacon device (12) and an interconnection therebetween, said first beacon device being capable of wireless message transmission over a short distance and to at least one portable device (10), wherein said first beacon (12) is operable to broadcast a series of inquiry messages (1) according to a first communications protocol, to detect any response messages (2) containing a portable device identifier for said portable device, and to transmit (3) a received identifier to said data store (14), and wherein said data store is configured to perform a comparison between a received identifier for said portable device and a stored identifier for the user and, upon detection of a match, to give clearance (4) for the release of goods or services to the same,
**characterised in that** the infrastructure further comprises a second device (16) operable to release said goods or services, coupled to communicate with a users portable device (10) to establish the identity of the same, and wherein the second device (16) is arranged to obtain said clearance (4) for that portable device from said data store (14) prior to release of said goods or services.

7. A communications infrastructure as claimed in Claim 6, wherein said interconnection between the first beacon device (12) and data store (14) comprises a secure data channel.

8. A communications infrastructure as claimed in Claim 6, further comprising a plurality of first beacon devices (12) linked to a common data store (14).

9. A method for enabling the user of a portable communications device (10) to purchase goods or services through a service interaction with a beacon device in an environment containing at least a data store (14) holding financial data of a user and a first beacon device (12) capable of wireless message transmission, and a second device (16) operable to release said goods or services, coupled to communicate with a users portable device (10) to establish the identity of the same, and arranged to obtain said clearance (4) for that portable device from said data store (14) prior to release of said goods or services, and wherein the first beacon broadcasts (1) a series of inquiry messages over a short distance and according to a first communications protocol, the users portable device detects such inquiry messages and replies (2) with an identifier for the portable device, the first beacon device transmits (3) a received identifier to said data store and, upon matching by said data store of a received and stored identifier, clearance (4) is obtained by the second device prior to release of said goods or services to a user.

10. A method as claimed in Claim 9, wherein the data store (14) further holds a financial balance for a user, from which balance a predetermined cost for respective goods or services is deducted prior to clearance being given for their release.

11. A method as claimed in Claim 9, wherein clearance is not given if, at any time, a current balance is insufficient to meet the cost of a requested item of goods or services.

12. A method as claimed in Claim 9, further comprising the step of determining that there are no similarly configured portable devices (10) communicating with the first beacon device (12) during the obtaining of clearance and prior to the release of said goods or services.

13. A method as claimed in Claim 12, wherein the step of determining requires the user to keep their portable device (10) within communications range of said first beacon (12) for a predetermined period.

14. A method as claimed in Claim 9, further comprising the step of enabling user-selection from a menu (20) of available goods or services prior to obtaining clearance for the release of the user-selected item of goods or services.

15. A method as claimed in Claim 9, wherein said short distance is less than 1 metre.

16. A method as claimed in Claim 9, wherein said short distance is less than 5 centimetres.

## Patentansprüche

1. Automatisches Zahlungssystem, das einen Datenspeicher (14), der Finanzdaten von einem Benutzer enthält, eine erste Bakenvorrichtung (12), die imstande ist, drahtlos Nachrichten zu übermitteln, und mindestens eine tragbare Vorrichtung (10), die imstande ist, solche Nachrichtenübermittlungen zu empfangen, umfasst, wobei der Datenspeicher (14) ferner eine Kennung enthält, die einer tragbaren Vorrichtung (10) des Benutzers zugeordnet ist, wobei die erste Bake (12) als eine Verkaufsstelle für Güter oder Dienstleistungen agiert und eingerichtet ist, um eine Reihe von Abfragenachrichten (1) über eine kurze Reichweite und gemäß einem ersten Kommunikationsprotokoll zu senden, wobei die mindestens eine tragbare Vorrichtung (10) eingerichtet ist, um solche Abfragenachrichten zu ermitteln, wenn sie innerhalb der Reichweite ist, und mit einer Kennung für die tragbare Vorrichtung zu antworten (2), wobei die erste Bakenvorrichtung (12) eingerichtet ist, um eine empfangene Kennung an den Datenspeicher (14) zu übermitteln (3), und wobei bei der Übereinstimmung von einer empfangenen und gespeicherten Kennung durch den Datenspeicher die Freigabe (4) für die Ausgabe der Güter oder Dienstleistungen an den Benutzer erteilt wird,
**dadurch gekennzeichnet, dass** das System ferner eine zum Ausgeben der Güter oder Dienstleistungen betriebsfähige zweite Vorrichtung (16) umfasst, die gekoppelt ist, um mit einer tragbaren Vorrichtung (10) eines Benutzers zu kommunizieren, um die Identität desselben festzustellen, und eingerichtet ist, um vor Ausgabe der Güter oder Dienstleistungen die Freigabe (4) für diese tragbare Vorrichtung vom Datenspeicher (14) zu erhalten.

2. System nach Anspruch 1, wobei die zweite Vorrichtung (16) eine oder mehrere zweite Bakenvorrichtungen umfasst, die mit der ersten Bakenvorrichtung (12) und dem Datenspeicher (14) gekoppelt und betriebfähig sind, um nach Erhalt der Kennung für diese tragbare Vorrichtung von der ersten Bakenvorrichtung (12) und nach Erhalt der Freigabe (4) vom Datenspeicher (14) Datendienste an die tragbare Vorrichtung (10) eines Benutzers zu liefern.

3. System nach Anspruch 1, das mehrere erste Bakenvorrichtungen (12) umfasst, die über einen geographischen Bereich verteilt sind und mit einem gemeinsamen Datenspeicher (14) verbunden sind, und von denen jede eingerichtet ist, um Kennungen (3) von einer tragbaren Vorrichtung (10) zu empfangen und die Freigabe für die Ausgabe von entsprechenden Gütern oder Dienstleistungen bereitzustellen.

4. System nach Anspruch 1, das ferner einen sicheren Datenkanal umfasst, der die erste Bakenvorrichtung (12) und den Datenspeicher (14) für die Übermittlung (3) von empfangenen Kennungen verbindet.

5. System nach Anspruch 1, wobei das erste Kommunikationsprotokoll Bluetooth-Nachrichtenübermittlung umfasst und wobei die erste Bakenvorrichtung (12) konfiguriert ist, um eine Reihe von Abfragenachrichten (1) auf einer vorbestimmten taktgesteuerten Abfolge von Frequenzen zu senden, wobei die Taktinformationen für die erste Bakenvorrichtung in Daten enthalten sind, die durch das zusätzliche Datenfeld getragen werden.

6. Kommunikationsinfrastruktur zur Verwendung im automatischen Zahlungssystem nach Anspruch 1, wobei die Infrastruktur den Datenspeicher (14) und die erste Bakenvorrichtung (12) und eine Zusammenschaltung dazwischen umfasst, wobei die erste Bakenvorrichtung imstande ist, drahtlos Nachrichten über eine kurze Distanz und an mindestens eine tragbare Vorrichtung (10) zu übermitteln, wobei die erste Bake (12) betriebsfähig ist, um gemäß einem ersten Kommunikationsprotokoll eine Reihe von Abfragenachrichten (1) zu senden, um Antwortnachrichten (2), die eine Kennung einer tragbaren Vorrichtung für die tragbare Vorrichtung umfassen, zu ermitteln, und, um eine empfangene Kennung an den Datenspeicher (14) zu übermitteln (3), und wobei der Datenspeicher konfiguriert ist, um einen Vergleich zwischen einer empfangenen Kennung für die tragbare Vorrichtung und einer gespeicherten Kennung für den Benutzer durchzuführen und, um bei Ermittlung einer Übereinstimmung die Freigabe (4) für die Ausgabe von Gütern oder Dienstleistungen an denselben zu erteilen,
**dadurch gekennzeichnet, dass** die Infrastruktur ferner eine zum Ausgeben der Güter oder Dienstleistungen betriebsfähige zweite Vorrichtung (16) umfasst, die gekoppelt ist, um mit der tragbaren Vorrichtung (10) eines Benutzers zu kommunizieren, um die Identität desselben festzustellen, und wobei die zweite Vorrichtung (16) eingerichtet ist, um vor Ausgabe der Güter oder Dienstleistungen die Freigabe (4) für diese tragbare Vorrichtung von dem Datenspeicher (14) zu erhalten.

7. Kommunikationsinfrastruktur nach Anspruch 6, wobei die Zusammenschaltung zwischen der ersten Bakenvorrichtung (12) und dem Datenspeicher (14) einen sicheren Datenkanal umfasst.

8. Kommunikationsinfrastruktur nach Anspruch 6, die ferner mehrere erste Bakenvorrichtungen (12) umfasst, die mit einem gemeinsamen Datenspeicher (14) verbunden sind.

9. Verfahren, das es dem Benutzer von einer tragbaren Kommunikationsvorrichtung (10) ermöglicht, Güter oder Dienstleistungen durch eine Dienstinteraktion mit einer Bakenvorrichtung in einer Umgebung zu kaufen, die mindestens einen Datenspeicher (14), der Finanzdaten von einem Benutzer enthält, und eine erste Bakenvorrichtung (12), die imstande ist, drahtlos Nachrichten zu übermitteln, und eine zweite Vorrichtung (16), die betriebsfähig ist, um die Güter oder Dienstleistungen auszugeben, umfasst, die gekoppelt ist, um mit der tragbaren Vorrichtung (10) eines Benutzers zu kommunizieren, um die Identität desselben festzustellen, und eingerichtet ist, um vor Ausgabe der Güter oder Dienstleistungen die Freigabe (4) für diese tragbare Vorrichtung vom Datenspeicher (14) zu erhalten, und wobei die erste Bake eine Reihe von Abfragenachrichten über eine kurze Distanz und gemäß einem ersten Kommunikationsprotokoll sendet (1), wobei die tragbare Vorrichtung des Benutzers solche Abfragenachrichten ermittelt und mit einer Kennung für die tragbare Vorrichtung antwortet (2), die erste Bakenvorrichtung eine empfangene Kennung an den Datenspeicher übermittelt (3) und bei der Übereinstimmung einer empfangenen und gespeicherten Kennung durch den Datenspeicher vor Ausgabe der Güter oder Dienstleistungen an einen Benutzer die Freigabe (4) durch die zweite Vorrichtung erhalten wird.

10. Verfahren nach Anspruch 9, wobei der Datenspeicher (14) ferner einen finanziellen Saldo für einen Benutzer enthält, von dessen Saldo ein vorbestimmter Preis für entsprechende Güter oder Dienstleistungen abgezogen wird, bevor die Freigabe für ihre Ausgabe erteilt wird.

11. Verfahren nach Anspruch 9, wobei die Freigabe nicht erteilt wird, wenn ein gegenwärtiger Saldo zu irgendeinem Zeitpunkt nicht ausreicht, um den Preis des verlangten Artikels von Gütern oder Dienstleistungen zu begleichen.

12. Verfahren nach Anspruch 9, das ferner den Schritt des Bestimmens, dass während dem Erhalt der Freigabe und vor der Ausgabe der Güter oder Dienstleistungen keine gleichartig konfigurierten tragbaren Vorrichtungen (10) mit der ersten Bakenvorrichtung (12) kommunizieren, umfasst.

13. Verfahren nach Anspruch 12, wobei der Schritt des Bestimmens vom Benutzer erfordert, seine tragbare Vorrichtung (10) während eines vorbestimmten Zeitraums innerhalb der Kommunikationsreichweite der ersten Bake (12) zu halten.

14. Verfahren nach Anspruch 9, das ferner vor dem Erhalt der Freigabe für die Ausgabe des durch den Benutzer ausgewählten Artikels von Gütern oder Dienstleistungen den Schritt des Ermöglichens der Benutzerauswahl von verfügbaren Gütern oder Dienstleistungen von einem Menü (20) umfasst.

15. Verfahren nach Anspruch 9, wobei die kurze Distanz weniger als 1 Meter beträgt.

16. Verfahren nach Anspruch 9, wobei die kurze Distanz weniger als 5 Zentimeter beträgt.

## Revendications

1. Système de paiement automatisé comprenant une mémoire de données (14) contenant des données financières d'un utilisateur, un premier dispositif de balise (12) apte pour des transmissions de message sans fil, et au moins un dispositif portable (10) apte à la réception de transmissions de message de ce type, dans lequel ladite mémoire de données (14) contient en outre un identificateur associé à un dispositif portable (10) dudit utilisateur, dans lequel ladite première balise (12) fait office de point de vente pour des biens ou services et est prévue pour diffuser une série de messages d'interrogation (1) sur une courte portée et en fonction d'un premier protocole de communication, dans lequel ledit au moins un dispositif portable (10) est prévu pour détecter des messages d'interrogation de ce type, lorsqu'il se trouve dans les limites de la portée, et pour répondre (2) avec un identificateur pour le dispositif portable, dans lequel ledit premier dispositif de balise (12) est prévu pour transmettre (3) un identificateur reçu à ladite mémoire de données (14), et dans lequel, la détection d'une concordance par ladite mémoire de données entre un identificateur reçu et stocké, l'habilitation (4) est donnée pour la mise à disposition desdits biens ou services à l'utilisateur, **caractérisé en ce que** le système comprend en outre un second dispositif (16) pouvant fonctionner pour la mise à disposition desdits biens ou services, connecté de manière à communiquer avec un dispositif portable (10) d'un utilisateur afin d'établir l'identité de celui-ci, et prévu pour obtenir ladite habilitation (4) pour ce dispositif portable à partir de ladite mémoire de données (14) avant la mise à disposition desdits biens ou services.

2. Système suivant la revendication 1, dans lequel ledit second dispositif (16) peut comprendre un ou plusieurs seconds dispositifs de balise, reliés au premier dispositif de balise (12) et à ladite mémoire de données (14) et pouvant fonctionner de manière à fournir des services de données au dispositif portable (10) d'un utilisateur, suite à la réception de l'identificateur pour ce dispositif portable à partir dudit premier dispositif de balise (12) et à la réception de ladite habilitation (4) à partir de ladite mémoire de données (14).

3. Système suivant la revendication 1, comprenant une pluralité de premiers dispositifs de balise (12) répartis sur une zone géographique et reliés à une mémoire de données commune (14), chaque balise étant prévue pour recevoir des identificateurs (3) à partir d'un dispositif portable (10) et fournir une habilitation pour la mise à disposition de biens ou services respectifs.

4. Système suivant la revendication 1, comprenant une voie de données sécurisée, reliant lesdits premier dispositif de balise (12) et mémoire de données (14) pour la transmission (3) d'identificateurs reçus.

5. Système suivant la revendication 1, dans lequel ledit premier protocole de communication comprend une messagerie Bluetooth et dans lequel le premier dispositif de balise (12) est configuré de manière à diffuser une série de messages d'interrogation (1) sur une succession cadencée et prédéterminée de fréquences, les informations d'horloge pour ledit premier dispositif de balise étant comprises dans des données portées par ledit champ de données supplémentaire.

6. Infrastructure de télécommunications à utiliser dans le système de paiement automatisé de la revendication (1), l'infrastructure comprenant ladite mémoire de données (14) et ledit premier dispositif de balise (12) ainsi qu'une interconnexion entre ceux-ci, ledit premier dispositif de balise étant apte à la transmission de message sans fil sur une courte distance et vers au moins un dispositif portable (10), dans laquelle ladite première balise (12) peut fonctionner de manière à diffuser une série de messages d'interrogation (1) en fonction d'un premier protocole de communication, à détecter tout message de réponse (2) contenant un identificateur de dispositif portable pour ledit dispositif portable, et à transmettre (3) un identificateur reçu à ladite mémoire de données (14), et dans laquelle ladite mémoire de données est configurée de manière à effectuer une comparaison entre un identificateur reçu pour ledit dispositif portable et un identificateur stocké pour l'utilisateur et, lors de la détection d'une concordance, pour donner l'habilitation (4) pour la mise à disposition de biens ou services à celui-ci, **caractérisée en ce que** l'infrastructure comprend en outre un second dispositif de balise (16) pouvant fonctionner pour la mise à disposition desdits biens ou services, connecté de manière à communiquer avec un dispositif portable (10) d'un utilisateur afin d'établir l'identité de celui-ci, et dans laquelle le second dispositif (16) est prévu pour obtenir ladite habilitation (4) pour ce dispositif portable à partir de ladite mémoire de données (14) avant la mise à disposition desdits biens ou services.

7. Infrastructure de communication suivant la revendication 6, dans laquelle ladite interconnexion entre le premier dispositif de balise (12) et la mémoire de données (14) comprend une voie de données sécurisée.

8. Infrastructure de télécommunications suivant la revendication 6, comprenant en outre une pluralité de premiers dispositifs de balise (12) reliés à une mémoire de données commune (14).

9. Procédé pour permettre à l'utilisateur d'un dispositif de télécommunications portable (10) d'acheter des biens ou des services par le biais d'une interaction de service avec un dispositif de balise dans un environnement comprenant au moins une mémoire de données (14) contenant des données financières d'un utilisateur, un premier dispositif de balise (12) apte à la transmission de message sans fil, et un second dispositif (16) pouvant fonctionner pour la mise à disposition desdits biens et services, connecté de manière à communiquer avec un dispositif portable (10) d'un utilisateur afin d'établir l'identité de celui-ci, et prévu pour obtenir ladite habilitation (4) pour ce dispositif portable à partir de ladite mémoire de données (14) avant la mise à disposition desdits biens ou services, et dans lequel la première balise diffuse (1) une série de messages d'interrogation sur une courte distance et en fonction d'un premier protocole de communication, le dispositif portable de l'utilisateur détecte des messages d'interrogation de ce type et répond (2) avec un identificateur pour le dispositif portable, le premier dispositif de balise transmet (3) un identificateur reçu à ladite mémoire de données, et suite à la détection d'une concordance par ladite mémoire de données entre des identificateurs reçu et stocké, l'habilitation (4) est obtenue par le second dispositif avant la mise à disposition desdits biens ou services à un utilisateur.

10. Procédé suivant la revendication 9, dans lequel la mémoire de données (14) contient en outre un solde financier pour un utilisateur, solde duquel un coût prédéterminé pour des biens ou services respectifs est déduit avant de donner l'habilitation pour leur mise à disposition.

11. Procédé suivant la revendication 9, dans lequel l'habilitation n'est pas donnée si, à tout moment, un solde actuel ne suffit pas à couvrir le coût d'un élément requis des biens ou services.

12. Procédé suivant la revendication 9, comprenant en outre l'étape supplémentaire pour déterminer qu'il n'existe aucun dispositif portable (10) configuré de manière similaire communiquant avec le premier dispositif de balise (12), durant l'obtention de l'habilitation et avant la mise à disposition desdits biens ou services.

13. Procédé suivant la revendication 12, dans lequel l'étape de détermination requiert que l'utilisateur garde son dispositif portable (10) dans les limites de la portée de communication dudit premier dispositif de balise (12) pendant une période prédéterminée.

14. Procédé suivant la revendication 9, comprenant en outre l'étape pour permettre la sélection par l'utilisateur à partir d'un menu (20) de biens ou de services disponibles avant d'obtenir l'habilitation pour la mise à disposition de l'article sélectionné par l'utilisateur parmi les biens ou services.

15. Procédé suivant la revendication 9, dans lequel ladite courte distance est inférieure à 1 mètre.

16. Procédé suivant la revendication 9, dans lequel ladite courte distance est inférieure à 5 centimètres.
